# FASCICULE DE BREVET EUROPEEN

(11) **EP 4 065 454 B1**
(45) Date de publication et mention de la délivrance du brevet: **04.10.2023**
(21) Numéro de dépôt: 20803845.5
(22) Date de dépôt: 12.11.2020
(51) Int. Cl.: B62J 1/00, B62J 1/08, B62J 1/10

(54) **SIÈGE ADAPTÉ NOTAMMENT À UNE BICYCLETTE**
SITZ, INSBESONDERE GEEIGNET FÜR EIN FAHRRAD
SEAT SUITABLE IN PARTICULAR FOR A BICYCLE

(30) Priorité: 27.11.2019 FR 1913299
(43) Date de publication de la demande: 05.10.2022
(73) Titulaire: PHY KY PSY Concept, 45100 Orléans (FR)
(72) Inventeur: GAULT, Philippe, 45100 ORLÉANS (FR)
(74) Mandataire: Marconnet, Sébastien
(86) Numéro de dépôt international: PCT/EP2020/081895
(87) Numéro de publication internationale: WO 2021/104888

(56) Documents cités:
- CN-A- 104 908 852
- CN-U- 205 113 527
- DE-A1-102013 005 383
- FR-A1- 3 055 253
- US-A- 5 725 274

## Description

La présente invention porte sur un siège conçu sur la base de critères de physiologie, d'anatomie, et de confort. L'invention trouve une application particulièrement avantageuse, mais non exclusive, avec les bicyclettes.

En effet, l'invention pourra également être utilisée avec les vélos d'appartement et autres appareils de musculation sur lesquels la personne se tient assis et doit réaliser un mouvement de pédalage ou un mouvement analogue avec ses jambes.

Le principe de la bicyclette est de pouvoir se déplacer en position assise, en sorte que l'adaptation du siège à la morphologie de l'utilisateur présente une grande importance. Or, les selles actuelles sont basées sur l'utilisation de la zone séparant les fesses qui comprend plusieurs parties susceptibles de souffrir de pressions fortes et prolongées, voire même de finir par présenter des lésions pathologiques.

Le document FR3 055 253 décrit un siège, notamment pour une bicyclette, comportant deux demi-selles concaves adaptées chacune à recevoir une fesse d'un utilisateur. Chaque demi-selle est montée rotative de manière à autoriser un basculement d'avant en arrière de chaque demi-selle lors d'un mouvement de pédalage. Ledit document FR3 055 253 divulgue un siège selon le préambule des revendications indépendantes 1 et 2.

L'invention vise à remédier efficacement à ces inconvénients en proposant un siège adapté notamment à une bicyclette, comportant:
- une pièce support,
- deux demi-selles concaves adaptées chacune à recevoir une fesse d'un utilisateur,
- chaque demi-selle étant montée rotative par rapport à la pièce support autour d'un axe de rotation de manière à autoriser un basculement de chaque demi-selle lors d'un mouvement de pédalage, ledit axe de rotation étant déporté vers l'arrière des demi-selles,
- ledit siège comportant en outre un système de stabilisation longitudinale du cycliste apte à assurer une retenue alternée du mouvement des demi-selles.

Selon un premier mode de réalisation de l'invention défini par l'objet de la revendication indépendante 1, ledit système de stabilisation longitudinale comporte:
- deux poulies disposées chacune en partie arrière de la demi-selle correspondante de façon à créer un palan, chaque palan comportant un brin terminal et un brin de renvoi dirigé vers une poulie de renvoi controlatérale,
- un des brins terminaux partant vers l'avant pour permettre un réglage d'une hauteur moyenne des demi-selles,
- l'autre des brins terminaux étant fixé à la pièce support ou à un élément fixe par rapport à ladite pièce support.

Selon un second mode de réalisation de l'invention défini par l'objet de la revendication indépendante 2, ledit système de stabilisation longitudinale comporte:
- un basculeur triangulaire, et
- des cordons de rappel fixés à l'extrémité d'un prolongement arrière rigide de chaque demi-selle, faisant levier, et repris par le basculeur triangulaire accompagnant un mouvement de rotation des demi-selles,
- un angle médian inférieur du basculeur triangulaire comprenant une poulie assurant à la fois une rotation en bascule du basculeur triangulaire et un réglage d'une inclinaison moyenne des demi-selles via une liaison à un palan de réglage.

Selon une réalisation de l'invention, un brin final du palan de réglage ressort à la partie avant de la pièce support et est bloqué par un dispositif de blocage.

Selon une réalisation de l'invention, les cordons de rappel peuvent être repris au niveau du basculeur triangulaire selon des points différents correspondants à des positions réglables en largeur des demi-selles.

Selon une réalisation de l'invention, l'axe de rotation est constitué par une arête de couteaux de support.

Selon une réalisation de l'invention, l'axe de rotation est déporté au-delà de portions des demi-selles supportant les fesses de l'utilisateur.

Selon une réalisation de l'invention, chaque demi-selle est en appui, libre en rotation, sur un couteau de support à une extrémité supérieure de la pièce support.

Selon une réalisation de l'invention, la pièce support comporte deux branches, symétriques, une pour supporter chaque demi-selle, un renfort transversal de rigidification reliant les deux branches parallèlement et à quelques centimètres de l'axe de rotation des couteaux de support portant les demi-selles.

Selon une réalisation de l'invention, la pièce support comprend deux trous, chaque trou étant apte à laisser passer une entretoise de renfort de chaque demi-selle, une entretoise de renfort assurant une retenue d'une demi-selle sur la pièce support en étant apte à venir en appui contre un bord correspondant du trou dans une position extrême.

Selon une réalisation de l'invention, une entretoise de renfort est emboîtée dans une mortaise correspondante.

Selon une réalisation de l'invention, une largeur d'une entretoise de renfort est réduite vers l'arrière pour passer dans le trou de la pièce support et se joindre à une prise d'un cordon de rappel à l'arrière d'une demi-selle.

Selon une réalisation de l'invention, un jeu vertical est prévu entre une entretoise de renfort et un trou correspondant de la pièce support pour permettre un jeu complet d'une rotation d'une demi-selle correspondante, notamment d'un angle de l'ordre de 45° environ.

Selon une réalisation de l'invention, un jeu latéral est prévu entre une entretoise de renfort et un trou correspondant de la pièce support pour permettre un réglage d'écartement des demi-selles pour une meilleure adaptation morphologique.

Selon une réalisation de l'invention, chaque demi-selle comprend une pièce en matériau rigide qui reçoit un couteau de support à l'arrière dans un angle creux transversal ménagé dans sa face inférieure vers l'arrière.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue en coupe d'un siège de bicyclette selon la présente invention comportant un système de stabilisation longitudinale à basculeur;
[Fig. 2] La figure 2 est une vue en coupe transversale d'un siège de bicyclette selon la présente invention comportant un système de stabilisation longitudinale à basculeur;
[Fig. 3] [Fig. 5] Les figures 3 à 5 sont des vues en perspective suivant différents angles d'un siège de bicyclette selon la présente invention comportant un système de stabilisation longitudinale à poulies et une seule demi-selle pour faciliter la compréhension;
[Fig. 6] La figure 6 est une vue arrière d'une pièce support de siège de bicyclette selon la présente invention;
[Fig. 7] La figure 7 est une vue de face d'une pièce support de siège de bicyclette selon la présente invention;
[Fig. 8] La figure 8 est une vue de côté d'une pièce support de siège de bicyclette selon la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

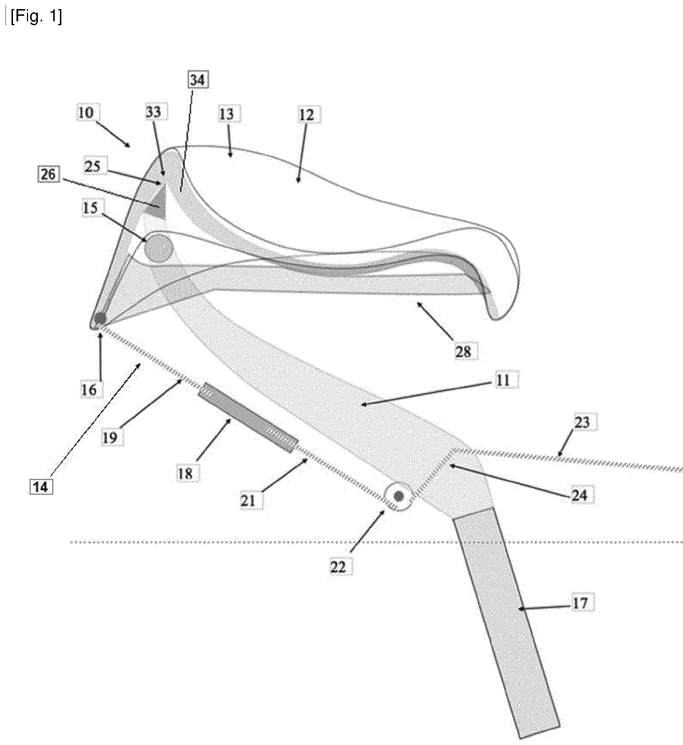

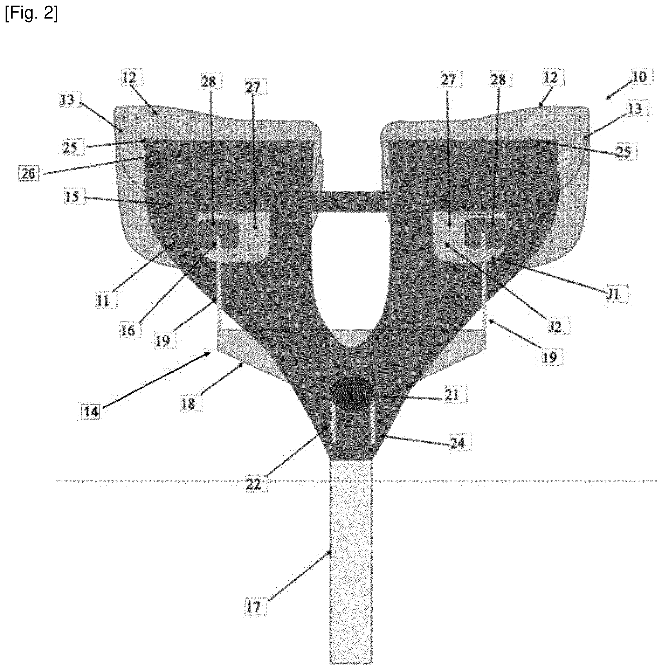

Les figures 1 et 2 montrent un siège 10 adapté notamment à une bicyclette comportant une pièce support 11 et deux demi-selles 12 concaves adaptées chacune à recevoir une fesse d'un utilisateur. Chaque demi-selle 12 comporte un bord externe 13 relevé pour assurer une stabilité suffisante du vélocyclopédiste.

Chaque demi-selle 12 est montée rotative par rapport à la pièce support 11 autour d'un axe de rotation 25 de manière à autoriser un basculement d'avant en arrière et d'arrière et avant de chaque demi-selle 12 lors d'un mouvement de pédalage. En variante, l'axe de rotation 25 pourra être un axe de rotation 25 classique à billes. L'axe de rotation 25 est constitué, de préférence, par une arête de couteaux de support 26. L'axe de rotation 25 est déporté vers l'arrière des demi-selles 12.

Le siège 10 comporte une entretoise 15 transversale rigidifiant le haut de la pièce support 11. Plus précisément, l'entretoise 15 est un renfort entre deux branches de la pièce support 11.

Le siège 10 comporte en outre un système de stabilisation longitudinale 14 du cycliste apte à assurer une retenue alternée du mouvement des demi-selles 12. Le système de stabilisation 14 comporte un axe transversal 16 joignant une coque de chaque demi-selle 12, son entretoise inférieure longitudinale de rigidification et un cordon de rappel, un basculeur triangulaire 18, notamment rigide, et des cordons de rappel 19 fixés chacun à l'extrémité d'un prolongement arrière rigide de chaque demi-selle 12, faisant levier, et repris par le basculeur triangulaire 18 accompagnant un mouvement de rotation des demi-selles 12. Une tige de selle 17 permet la fixation du siège 10 sur un cadre de la bicyclette.

Un angle médian inférieur du basculeur triangulaire 18 comprend une poulie 21, notamment simple ou double, assurant à la fois une rotation en bascule du basculeur triangulaire 18 et un réglage d'une inclinaison moyenne des demi-selles 12 via une liaison à un palan de réglage 22.

Un brin final 23 du palan de réglage 22, qui peut être à plusieurs brins (2, 3, 4 ou plus), peut ressortir à la partie avant de la pièce support 11 et être bloqué par un dispositif de blocage. Le dispositif de blocage peut prendre la forme d'un taquet, en sifflet ou à mors ou à roulette. Le brin final 23 du palan, accessible à la main, est tendu à l'avant du cadre par un élastique. Un taquet coinceur 24 permet un maintien du brin final 23 du palan.

Les cordons de rappel 19 peuvent être repris au niveau du basculeur triangulaire 18 selon des points différents correspondants à des positions réglables en largeur des demi-selles 12.

De préférence, l'axe de rotation 25 est déporté au-delà des portions des demi-selles 12 supportant les fesses de l'utilisateur. Ce positionnement de l'axe 25 est effectué pour des raisons de physiologie du mouvement des jambes.

Chaque demi-selle 12 est en appui, libre en rotation, sur un couteau de support 26 à une extrémité supérieure de la pièce support 11. La pièce support 11 comporte deux branches, symétriques, une pour supporter chaque demi-selle 12. Un renfort transversal de rigidification relie les deux branches parallèlement et à quelques centimètres de l'axe de rotation 25 des couteaux de support 26 portant les demi-selles 12.

La pièce support 11 comprend deux trous 27, chaque trou 27 étant apte à laisser passer une entretoise de renfort 28 de chaque demi-selle 12. Une entretoise de renfort 28 assure une retenue d'une demi-selle 12 sur la pièce support 11 en étant apte à venir en appui contre un bord correspondant du trou 27 dans une position extrême.

Une entretoise de renfort 28 est emboîtée dans une mortaise correspondante ayant une largeur s'inscrivant juste dans celle de la pièce supérieure. Une largeur d'une entretoise de renfort 28 est réduite vers l'arrière pour passer dans le trou 27 de la pièce support 11 et se joindre à une prise d'un cordon de rappel 19 à l'arrière d'une demi-selle 12.

Un jeu vertical J1 est prévu entre une entretoise de renfort 28 et un trou 27 correspondant de la pièce support 11 pour permettre un jeu complet d'une rotation d'une demi-selle 12 correspondante, notamment d'un angle de l'ordre de 45° environ. Par "de l'ordre de", on entend une variation de plus ou moins 10% autour de la valeur cible.

Un jeu latéral J2 est prévu entre une entretoise de renfort 28 et un trou 27 correspondant de la pièce support 11 pour permettre un réglage d'écartement des demi-selles 12 pour une meilleure adaptation morphologique. Le jeu se retrouve au niveau des couteaux de support 26 et de l'angle 25 qui les reçoit. De petites cales venant au fond de l'angle des demi-selles 12, et retenues par de petites encoches dans la pièce, permettent de maintenir les demi-selles 12 dans une position latérale déterminée.

En variante, plusieurs encoches peuvent recevoir une petite entretoise ménagée dans l'angle des demi-selles 12. Le déblocage de l'axe arrière qui retient aussi le cordon de rappel 19 permet de libérer l'entretoise de chaque demi-selle 12 et de donner le jeu vertical permettant de changer d'encoche et donc de position latérale de la demi-selle 12. D'autres systèmes de réglages en largeur peuvent être envisagés.

Chaque demi-selle 12 comprend une pièce 34 en matériau rigide qui reçoit un couteau de support 26 à l'arrière dans un angle d'interface 33 creux. L'angle d'interface 33 des demi-selles 12 avec les couteaux de support 26 est renforcé avec des glissières métalliques permettant un réglage en largeur. L'angle 33 d'environ 70° est ménagé dans la face inférieure des demi-selles 12 vers l'arrière.

La pièce 34 en matériau rigide est prolongée vers l'arrière pour disposer d'une prise de fixation d'un cordon de rappel 19. La pièce 34 en matériau rigide présente des courbes pour optimiser le confort du cycliste et pour lui donner une rigidité adéquate. Le confort sera amélioré par un coussin de mousse et un revêtement textile.

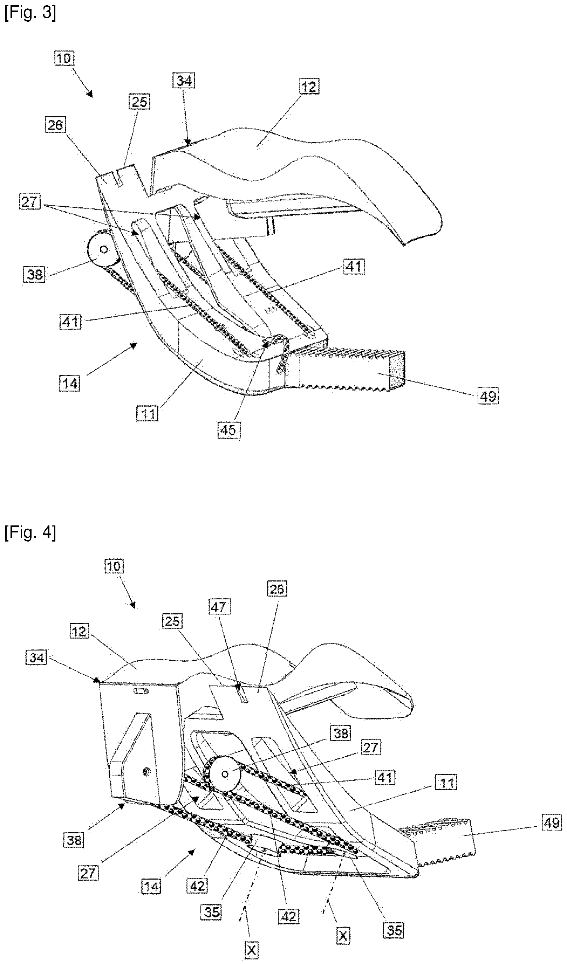

Dans le mode de réalisation des figures 3 et 4, le système de stabilisation longitudinale 14 comporte deux poulies de renvoi 35, et deux poulies 38 disposées chacune en partie arrière d'une demi-selle 12 correspondante de façon à créer un palan.

Chaque palan comporte un brin terminal 41 et un brin de renvoi 42 dirigé vers une poulie de renvoi 35 controlatérale, les brins de renvoi 42 étant reliés entre eux.

Un des brins terminaux 41 part vers l'avant par le bas du cadre pour permettre un réglage d'une hauteur moyenne des demi-selles 12. L'autre des brins terminaux 41 est fixé à la pièce support 11 ou à un élément fixe par rapport à la pièce support 11.

A l'exception du système de stabilisation longitudinal 14, le reste du siège 10 est structurellement analogue à celui décrit en référence avec les figures 1 et 2.

En variante, le siège 10 pourra comporter une entretoise 28 large à l'avant qui soutient un bloc de mousse coincé entre la demi-selle 12 proprement dite et l'entretoise 28. La demi-selle 12 est ouverte vers le haut sur sa moitié avant pour que la jambe repose sur un coussin de mousse confortable.

Comme on peut le voir sur la figure 3, le siège 10 pourra également comporter un taquet coinceur 45 en sifflet qui permet le réglage de tension du bout et donc de l'inclinaison moyenne des demi-selles 12. Le taquet coinceur 45 est disposé sur le support 11. En variante, d'autres moyens peuvent permettre d'effectuer ce réglage de façons différentes et plus accessibles.

Par ailleurs, les poulies de renvoi 35 pourront comporter des axes X réglables pour s'adapter aux réglages en largeur des demi-selles 12 pour faire travailler les poulies de renvoi 35 dans un axe correct.

Sur la figure 4, on voit le système de stabilisation longitudinal 14 ayant une encoche 47 ménagée dans le couteau de support 26 et une glissière en haut de la face arrière de la demi-selle 12 permettant le blocage d'un écrou carré à une largeur voulue dans l'encoche 47 du couteau de support 26. La pièce constituant la joue inférieure des poulies 35 attachées à la pièce support 11 n'est pas représentée.

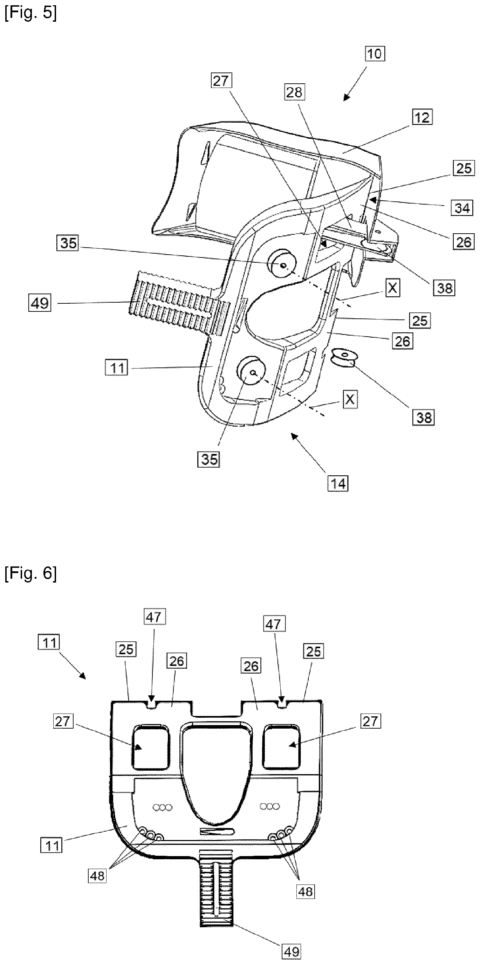

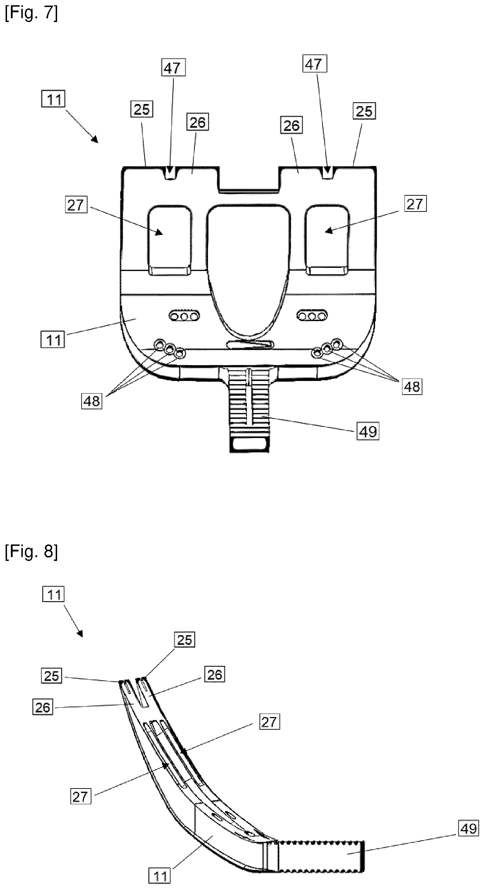

Les figures 6, 7 et 8 représentent le couteau de support 26. Les trous 48 de la pièce support 11 permettent de faire varier la position des poulies 38 et l'ancrage du bout pour que le palan à l'arrière des demi-selles 12 tire dans le meilleur axe possible.

La partie avant du siège 10 comporte une crémaillère 49 permettant le réglage avant-arrière de la position des demi-selles 12 sur la tige de selle 17 spécifique, tel que montré sur les figures 3, 4, 5, 6, 7 et 8.

## Revendications

1. Siège (10) adapté notamment à une bicyclette, ledit siège comportant:
- une pièce support (11),
- deux demi-selles (12) concaves adaptées chacune à recevoir une fesse d'un utilisateur,
- chaque demi-selle (12) étant montée rotative par rapport à la pièce support (11) autour d'un axe de rotation (25) de manière à autoriser un basculement de chaque demi-selle (12) lors d'un mouvement de pédalage, ledit axe de rotation (25) étant déporté vers l'arrière des demi-selles (12),
- ledit siège (10) comportant en outre un système de stabilisation longitudinale (14) du cycliste apte à assurer une retenue alternée du mouvement des demi-selles (12) **caractérisé en ce que** ledit système de stabilisation longitudinale (14) comporte:
- deux poulies (38) disposées chacune en partie arrière de la demi-selle (12) correspondante de façon à créer un palan, chaque palan comportant un brin terminal (41) et un brin de renvoi (42) dirigé vers une poulie de renvoi (35) controlatérale,
- un des brins terminaux (41) partant vers l'avant pour permettre un réglage d'une hauteur moyenne des demi-selles (12),
- l'autre des brins terminaux (41) étant fixé à la pièce support (11) ou à un élément fixe par rapport à ladite pièce support (11).

2. Siège (10) adapté notamment à une bicyclette, ledit siège comportant:
- une pièce support (11),
- deux demi-selles (12) concaves adaptées chacune à recevoir une fesse d'un utilisateur,
- chaque demi-selle (12) étant montée rotative par rapport à la pièce support (11) autour d'un axe de rotation (25) de manière à autoriser un basculement de chaque demi-selle (12) lors d'un mouvement de pédalage, ledit axe de rotation (25) étant déporté vers l'arrière des demi-selles (12),
- ledit siège (10) comportant en outre un système de stabilisation longitudinale (14) du cycliste apte à assurer une retenue alternée du mouvement des demi-selles (12) **caractérisé en ce que** ledit système de stabilisation longitudinale (14) comporte:
- un basculeur triangulaire (18), et
- des cordons de rappel (19) fixés à l'extrémité d'un prolongement arrière rigide de chaque demi-selle (12), faisant levier, et repris par le basculeur triangulaire (18) accompagnant un mouvement de rotation des demi-selles (12),
- un angle médian inférieur du basculeur triangulaire (18) comprenant une poulie (21) assurant à la fois une rotation en bascule du basculeur triangulaire (18) et un réglage d'une inclinaison moyenne des demi-selles (12) via une liaison à un palan de réglage (22).

3. Siège selon la revendication 2, **caractérisé en ce qu'**un brin final (23) du palan de réglage (22) ressort à la partie avant de la pièce support (11) et est bloqué par un dispositif de blocage.

4. Siège selon la revendication 2 ou 3, **caractérisé en ce que** les cordons de rappel (19) peuvent être repris au niveau du basculeur triangulaire (18) selon des points différents correspondants à des positions réglables en largeur des demi-selles (12).

5. Siège selon l'une quelconque des revendications 1 à 4, **caractérisé en ce que** l'axe de rotation (25) est constitué par une arête (25) de couteaux de support (26).

6. Siège selon l'une quelconque des revendications 1 à 5, **caractérisé en ce que** l'axe de rotation (25) est déporté au-delà de portions des demi-selles (12) supportant les fesses de l'utilisateur.

7. Siège selon la revendication 5, **caractérisé en ce que** chaque demi-selle (12) est en appui, libre en rotation, sur le couteau de support (26) correspondant à une extrémité supérieure de la pièce support (11).

8. Siège selon les revendications 5 et 7, **caractérisé en ce que** la pièce support (11) comporte deux branches, symétriques, une pour supporter chaque demi-selle (12), un renfort transversal de rigidification reliant les deux branches parallèlement et à quelques centimètres de l'axe de rotation (25) des couteaux de support (26) portant les demi-selles (12).

9. Siège selon l'une quelconque des revendications 1 à 8, **caractérisé en ce que** la pièce support (11) comprend deux trous (27), chaque trou (27) étant apte à laisser passer une entretoise de renfort (28) de chaque demi-selle (12), ladite entretoise de renfort (28) assurant une retenue de la demi-selle (12) correspondante sur la pièce support (11) en étant apte à venir en appui contre un bord correspondant du trou (27) dans une position extrême.

10. Siège selon la revendication 9, **caractérisé en ce que** chaque entretoise de renfort (28) est emboîtée dans une mortaise correspondante.

11. Siège selon l'une des revendications 9 et 10 prise dépendante de la revendication 2, **caractérisé en ce qu'**une largeur de chaque entretoise de renfort (28) est réduite vers l'arrière pour passer dans le trou (27) correspondant de la pièce support (11) et se joindre à une prise du cordon de rappel (19) correspondant à l'arrière de la demi-selle (12) correspondante.

12. Siège selon l'une quelconque des revendications 9 à 11, **caractérisé en ce qu'**un jeu vertical (J1) est prévu entre chaque entretoise de renfort (28) et le trou (27) correspondant de la pièce support (11) pour permettre un jeu complet d'une rotation de la demi-selle (12) correspondante, notamment d'un angle de l'ordre de 45° environ.

13. Siège selon l'une quelconque des revendications 9 à 12, **caractérisé en ce qu'**un jeu latéral (J2) est prévu entre chaque entretoise de renfort (28) et le trou (27) correspondant de la pièce support (11) pour permettre un réglage d'écartement des demi-selles (12) pour une meilleure adaptation morphologique.

14. Siège selon la revendication 5, **caractérisé en ce que** chaque demi-selle (12) comprend une pièce (34) en matériau rigide qui reçoit le couteau de support (26) correspondant à l'arrière dans un angle creux transversal ménagé dans sa face inférieure vers l'arrière.

## Patentansprüche

1. Sitz (10), insbesondere angepasst an ein Fahrrad, umfassend:
- ein Stützteil (11),
- zwei konkave Halbsättel (12), die jeweils zur Aufnahme eines Gesäßes eines Benutzers geeignet sind,
- wobei jeder Halbsattel (12) relativ zum Stützteil (11) um eine Drehachse (25) drehbar gelagert ist, um ein Kippen jedes Halbsattels (12) während einer Tretbewegung zu ermöglichen, wobei die Drehachse (25) zur Rückseite der Halbsättel (12) hin versetzt ist,
- wobei der Sitz (10) außerdem ein Längsstabilisierungssystem (14) für den Radfahrer umfasst, das eine abwechselnde Einschränkung der Bewegung der Halbsättel (12) gewährleisten kann,
**dadurch gekennzeichnet, dass** das Längsstabilisierungssystem (14) umfasst:
- zwei Scheiben (38), die jeweils im hinteren Teil des entsprechenden Halbsattels (12) angeordnet sind, um ein Hebezeug zu bilden, wobei jedes Hebezeug ein Endtrum (41) und ein auf eine Umlenkscheibe (35) gerichtetes Umlenktrum (42) auf der gegenüberliegenden Seite umfasst,
- wobei sich das eine Endtrum (41) nach vorne erstreckt, um eine Einstellung einer durchschnittlichen Höhe der Halbsättel (12) zu ermöglichen,
- wobei das andere Endtrum (41) am Stützteil (11) oder an einem bezüglich des Stützteils (11) festen Element befestigt ist.

2. Sitz (10), insbesondere angepasst an ein Fahrrad, umfassend:
- ein Stützteil (11),
- zwei konkave Halbsättel (12), die jeweils zur Aufnahme eines Gesäßes eines Benutzers geeignet sind,
- wobei jeder Halbsattel (12) relativ zum Stützteil (11) um eine Drehachse (25) drehbar gelagert ist, um ein Kippen jedes Halbsattels (12) während einer Tretbewegung zu ermöglichen, wobei die Drehachse (25) zur Rückseite der Halbsättel (12) hin versetzt ist,
- wobei der Sitz (10) außerdem ein Längsstabilisierungssystem (14) für den Radfahrer umfasst, das eine abwechselnde Einschränkung der Bewegung der Halbsättel (12) gewährleisten kann,
**dadurch gekennzeichnet, dass** das Längsstabilisierungssystem (14) umfasst:
- eine dreieckige Wippe (18) und
- Rückholschnüre (19), die am Ende einer starren hinteren Verlängerung jedes Halbsattels (12) befestigt sind, als Hebel wirken und von der dreieckigen Wippe (18) aufgenommen werden, die eine Drehbewegung der Halbsättel (12) begleitet,
- wobei ein unterer mittlerer Winkel der dreieckige Wippe (18) eine Scheibe (21) umfasst, die über eine Verbindung mit einem Einstellhebezeug (22) sowohl eine Wippdrehung der dreieckige Wippe (18) als auch eine Einstellung einer durchschnittlichen Neigung der Halbsättel (12) gewährleistet.

3. Sitz nach Anspruch 2, **dadurch gekennzeichnet, dass** ein Endtrum (23) des Einstellhubwerks (22) aus dem vorderen Teil des Stützteils (11) austritt und durch eine Blockiereinrichtung blockiert ist.

4. Sitz nach Anspruch 2 oder 3, **dadurch gekennzeichnet, dass** die Rückholschnüre (19) an unterschiedlichen Stellen, die der breiteinstellbaren Positionen der Halbsättel (12) entsprechen, an der dreieckigen Wippe (18) aufnehmbar sind.

5. Sitz nach einem der Ansprüche 1 bis 4, **dadurch gekennzeichnet, dass** die Drehachse (25) durch eine Kante (25) von Stützmessern (26) gebildet ist.

6. Sitz nach einem der Ansprüche 1 bis 5, **dadurch gekennzeichnet, dass** die Drehachse (25) über die das Gesäß des Benutzers stützenden Abschnitte der Halbsättel (12) hinaus versetzt ist.

7. Sitz nach Anspruch 5, **dadurch gekennzeichnet, dass** jeder Halbsattel (12) frei drehbar auf dem Stützmesser (26) aufliegt, das einem oberen Ende des Stützteils (11) entspricht.

8. Sitz nach den Ansprüchen 5 und 7, **dadurch gekennzeichnet, dass** das Stützteil (11) zwei symmetrische Schenkel zum jeweiligen Stützen der Halbsättel (12), wobei eine Querversteifung die beiden Schenkel parallel und a wenige Zentimeter von der Drehachse (25) der die Halbsättel (12) stützenden Stützmesser (26) entfernt verbindet.

9. Sitz nach einem der Ansprüche 1 bis 8, **dadurch gekennzeichnet, dass** das Stützteil (11) zwei Löcher (27) aufweist, wobei jedes Loch (27) den Durchgang eines verstärkenden Abstandshalters (28) jeder Halbsattel (12) ermöglicht, wobei der verstärkende Abstandshalter (28) den entsprechenden Halbsattel (12) auf dem Stützteil (11) hält, während er in einer Extremposition an einer entsprechenden Kante des Lochs (27) anliegt.

10. Sitz nach Anspruch 9, **dadurch gekennzeichnet, dass** jeder verstärkende Abstandshalter (28) in eine entsprechende Aussparung eingepasst ist.

11. Sitz nach einem der Ansprüche 9 und 10 als abhängig von Anspruch 2, **dadurch gekennzeichnet, dass** die Breite jedes verstärkende Abstandshalters (28) nach hinten hin abnimmt, um durch das Loch (27), das dem Stützteil (11) entspricht, hindurchzugehen, und mit einer Halterung der Rückholschnur (19), die der Rückseite des entsprechenden Halbsattels (12) entspricht, zu verbinden.

12. Sitz nach einem der Ansprüche 9 bis 11, **dadurch gekennzeichnet, dass** zwischen jedem verstärkenden Abstandshalter (28) und dem dem Stützteil (11) entsprechenden Loch (27) ein vertikaler Spiel (J1) zum Ermöglichen eines vollständigen Spiels für eine Drehung des entsprechenden Halbsattels (12), insbesondere mit einem Winkel von etwa 45°, vorgesehen ist.

13. Sitz nach einem der Ansprüche 9 bis 12, **dadurch gekennzeichnet, dass** zwischen jedem verstärkenden Abstandshalter (28) und dem dem Stützteil (11) entsprechenden Loch (27) ein seitlicher Spiel (J2) zum Einstellen eines Abstands zwischen den Halbsätteln (12) für eine bessere morphologische Anpassung vorgesehen ist.

14. Sitz nach Anspruch 5, **dadurch gekennzeichnet, dass** jeder Halbsattel (12) aus einem Stück (34) aus starrem Material besteht, das in einem nach hinten geformten hohlen Querwinkel in der Unterseite das entsprechende Stützmesser (26) an der Rückseite aufnimmt.

## Claims

1. A seat (10) adapted in particular to a bicycle, said seat comprising:
- a support part (11),
- two concave half-saddles (12) each adapted to receive a buttock of a user,
- each half-saddle (12) being rotatably mounted relative to the support part (11) about an axis of rotation (25) so as to allow a tilting of each half-saddle (12) during a movement of pedaling, said axis of rotation (25) being offset towards the rear of the half-saddles (12),
- said seat (10) further comprising a longitudinal stabilization system (14) for the cyclist capable of ensuring alternate restraint of the movement of the half-saddles (12), **characterized in that** said longitudinal stabilization system (14) comprises:
- two pulleys (38) each arranged in the rear part of the corresponding half-saddle (12) so as to create a hoist, each hoist comprising an end strand (41) and a return strand (42) directed towards a return pulley (35) on the opposite side,
- one of the end strands (41) extending forward in order to allow adjustment of an average height of the half-saddles (12),
- the other of the end strands (41) being fixed to the support part (11) or to a fixed element with respect to said support part (11).

2. The seat (10) adapted in particular to a bicycle, said seat comprising:
- a support part (11),
- two concave half-saddles (12) each adapted to receive a buttock of a user,
- each half-saddle (12) being rotatably mounted relative to the support part (11) about an axis of rotation (25) so as to allow a tilting of each half-saddle (12) during a movement of pedaling, said axis of rotation (25) being offset towards the rear of the half-saddles (12),
- said seat (10) further comprising a longitudinal stabilization system (14) for the cyclist capable of ensuring alternate restraint of the movement of the half-saddles (12), **characterized in that** said longitudinal stabilization system (14) comprises:
- a triangular rocker (18), and
- return cords (19) fixed to the end of a rigid rear extension of each half-saddle (12), acting as a lever, and taken up by the triangular rocker (18) accompanying a rotational movement of the half-saddles (12),
- a lower median angle of the triangular rocker (18) comprising a pulley (21) ensuring both a rocking rotation of the triangular rocker (18) and an adjustment of an average inclination of the half-saddles (12) via a connection to an adjustment hoist (22).

3. The seat according to claim 2, **characterized in that** an end strand (23) of the adjusting hoist (22) exits from the front part of the support part (11) and is blocked by a blocking device.

4. The seat according to claim 2 or 3, **characterized in that** the return cords (19) can be taken up at the triangular rocker (18) according to different points corresponding to positions adjustable in width of the half-saddles (12).

5. The seat according to any one of the claims 1 to 4, **characterized in that** the axis of rotation (25) is formed by an edge (25) of support blades (26).

6. The seat according to any one of the claims 1 to 5, **characterized in that** the axis of rotation (25) is offset beyond portions of the half-saddles (12) supporting the buttocks of the user.

7. The seat according to claim 5, **characterized in that** each half-saddle (12) bears, free in rotation, on the support blade (26) corresponding to an upper end of the support part (11) .

8. The seat according to claims 5 and 7, **characterized in that** the support part (11) comprises two symmetrical branches for respectively support the half-saddles (12), a transverse stiffening reinforcement connecting the two branches in a parallel manner and a few centimeters from the axis of rotation (25) of the support blades (26) carrying the half saddles (12).

9. The seat according to any one of the claims 1 to 8, **characterized in that** the support part (11) comprises two holes (27), each hole (27) enabling the passage of a reinforcing spacer (28) of each half-saddle (12), said reinforcing spacer (28) retaining the corresponding half-saddle (12) on the support part (11) while bearing against a corresponding edge of the hole (27) in an extreme position.

10. The seat according to claim 9, **characterized in that** each reinforcing spacer (28) is fitted into a corresponding mortise.

11. The seat according to one of the claims 9 and 10 considered as dependent to claim 2, **characterized in that** a width of each reinforcing spacer (28) is reduced towards the rear in order to pass through the hole (27) corresponding to the support part (11) and join a hold of the return cord (19) corresponding to the rear of the corresponding half-saddle (12) .

12. The seat according to any one of the claims 9 to 11, **characterized in that** a vertical clearance (J1) is provided between each reinforcing spacer (28) and the hole (27) corresponding to the support part (11) for allowing a complete clearance for a rotation of the corresponding half-saddle (12), in particular with an angle of about 45°.

13. The seat according to any one of the claims 9 to 12, **characterized in that** a lateral clearance (J2) is provided between each reinforcing spacer (28) and the hole (27) corresponding to the support part (11) for adjusting a gap between the half-saddles (12) for a better morphological adaptation.

14. The seat according to claim 5, **characterized in that** each half-saddle (12) comprises a piece (34) of rigid material which receives the support blade (26) corresponding to the rear in a hollow transverse angle formed rearwards in its underside.
